(19)

Europäisches Patentamt

European Patent Office

Office européen des brevets

(11) **EP 4 514 017 A1**

(12) **EUROPEAN PATENT APPLICATION**
published in accordance with Art. 153(4) EPC

(43) Date of publication:
**26.02.2025 Bulletin 2025/09**

(21) Application number: **22938578.6**

(22) Date of filing: **22.04.2022**

(51) International Patent Classification (IPC):
*H04W 72/0457* (2023.01)   *H04W 72/0453* (2023.01)

(52) Cooperative Patent Classification (CPC):
**H04W 72/0453; H04W 72/0457**

(86) International application number:
**PCT/JP2022/018626**

(87) International publication number:
**WO 2023/203779 (26.10.2023 Gazette 2023/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **NTT DOCOMO, INC.**
**Tokyo 100-6150 (JP)**

(72) Inventors:
• **TAKAHASHI, Yuki**
**Tokyo 100-6150 (JP)**

• **KUMAGAI, Shinya**
**Tokyo 100-6150 (JP)**
• **YOSHIOKA, Shohei**
**Tokyo 100-6150 (JP)**
• **OKAMURA, Masaya**
**Tokyo 100-6150 (JP)**
• **OKANO, Mayuko**
**Tokyo 100-6150 (JP)**
• **NAGATA, Satoshi**
**Tokyo 100-6150 (JP)**

(74) Representative: **Hoffmann Eitle**
**Patent- und Rechtsanwälte PartmbB**
**Arabellastraße 30**
**81925 München (DE)**

(54) **TERMINAL, BASE STATION, AND COMMUNICATION METHOD**

(57)    A terminal includes: a communication unit configured to perform uplink or downlink communication in a frequency band aggregated by carrier aggregation; and a control unit configured to, when scheduling is performed with respect to a unit including a plurality of component carriers in the aggregated frequency band, switch bandwidth parts that are set with respect to respective component carriers in the plurality of component carriers, separately or together, or switch a bandwidth part that is set across component carriers in the plurality of component carriers.

FIG.8

**Description**

Technical Field

The present invention relates to a terminal, a base station and a communication method in a wireless communication system.

Background Art

In New Radio (NR) (also referred to as "5G"), which is a succeeding system of Long Term Evolution (LTE), techniques to satisfy the requirement of providing a large-capacity system, a high-speed data transmission speed, low delay, simultaneous access of a large number of terminals, low cost, power saving, and so forth are under study (see, for example, Non Patent Literature 1).

In addition, in NR, a carrier aggregation (CA) function to use a broadband to secure data resources is being studied continuously following LTE. In carrier aggregation function, a plurality of component carriers (CC) is bundled, so that broadband data resources can be secured.

Citation List

Non Patent Literature

Non Patent Literature 1: 3GPP TS 38.300 V16.8.0(2021-12)

Summary of Invention

Technical Problem

More flexible and efficient resource allocation may be required in future systems (for example, NR Release 18 and 6G which is a successor system of NR). However, with the existing carrier aggregation function, it is necessary to schedule data resources for each of a plurality of bundled component carriers, and the large overhead of resource allocation poses a problem.

The present invention has been made in view of the foregoing, and aims to reduce the resource allocation overhead.

Solution to Problem

According to the techniques disclosed herein, there is provided a terminal including: a communication unit configured to perform uplink or downlink communication in a frequency band aggregated by carrier aggregation; and a control unit configured to, when scheduling is performed with respect to a unit including a plurality of component carriers in the aggregated frequency band, switch bandwidth parts that are set with respect to respective component carriers in the plurality of component carriers, separately or together, or switch a bandwidth part that is set across component carriers in the plurality of component carriers.

Advantageous Effects of Invention

The techniques disclosed herein provide a technique capable of reducing resource allocation overhead.

Brief Description of Drawings

[Fig. 1] Fig. 1 is a diagram for describing a wireless communication system according to an embodiment of the present invention.
[Fig. 2] Fig. 2 is a first diagram illustrating an example structure of a virtual CC according to an embodiment of the present invention.
[Fig. 3] Fig. 3 is a second diagram illustrating an example structure of a virtual CC according to an embodiment of the present invention.
[Fig. 4] Fig. 4 is a diagram illustrating examples of parameters in an existing BWP configuration.

[Fig. 5] Fig. 5 is a diagram illustrating a setting example of a conventional inactive timer.

[Fig. 6] Fig. 6 is a diagram illustrating an example of terminal capability of existing BWP switching delay.

[Fig. 7] Fig. 7 is a diagram illustrating an example of an existing delay period of BWP switching.

[Fig. 8] Fig. 8 is a diagram for describing Case 1-1 according to an embodiment of the present invention.

[Fig. 9] Fig. 9 is a diagram for describing Case 1-2 according to an embodiment of the present invention.

[Fig. 10] Fig. 10 is a diagram for describing Case 2 according to an embodiment of the present invention.

[Fig. 11] Fig. 11 is a diagram for describing the BWP switching delay in Case 1-1 according to an embodiment of the present invention.

[Fig. 12] Fig. 12 is a diagram for describing the BWP switching delay in Case 1-2 according to an embodiment of the present invention.

[Fig. 13] Fig. 13 is a diagram for describing the BWP switching delay in Case 2 according to an embodiment of the present invention.

[Fig. 14] Fig. 14 is a diagram illustrating an example functional structure of a base station according to an embodiment of the present invention.

[Fig. 15] Fig. 15 is a diagram illustrating an example functional structure of a terminal according to an embodiment of the present invention.

[Fig. 16] Fig. 16 is a diagram illustrating an example of a hardware structure of a base station or a terminal according to an embodiment of the present invention.

[Fig. 17] Fig. 17 is a diagram illustrating an example structure of a vehicle according to an embodiment of the present invention.

Description of Embodiments

Hereinafter, an embodiment of the present invention will be described with reference to the drawings. Note that the embodiment described below is an example, and the embodiment to which the present invention is applicable is not limited to the following embodiment.

In the operation of the wireless communication system according to an embodiment of the present invention, existing technologies may be used as appropriate. The existing technologies include, but are not limited to, existing LTE. In addition, the term "LTE" as used in this specification has a broad meaning covering LTE-Advanced and systems after LTE-Advanced (for example, NR), unless otherwise specified.

In the embodiment of the present invention described below, terms such as a synchronization signal (SS), a primary SS (PSS), a secondary SS (SSS), a physical broadcast channel (PBCH), a physical random access channel (PRACH), a physical downlink control channel (PDCCH), a physical downlink shared channel (PDSCH), a physical uplink control channel (PUCCH), and a physical uplink shared channel (PUSCH) used in existing LTE are used. This is for convenience of description, and similar signals, functions, and the like may be referred to by other names. In addition, the above-described terms in NR correspond to NR-SS, NR-PSS, NR-SSS, NR-PBCH, NR-PRACH, and the like. However, even signals used in NR are not necessarily prefixed by "NR-".

In an example embodiment of the present invention, the duplex system may be a time division duplex (TDD) system, a frequency division duplex (FDD) system, or other (for example, flexible duplex or the like) systems.

In addition, in an embodiment of the present invention, when a wireless parameter or the like is "configured", this may mean that a predetermined value is pre-configured, or that the wireless parameter indicated from a base station 10 or a terminal 20 is configured.

(System structure)

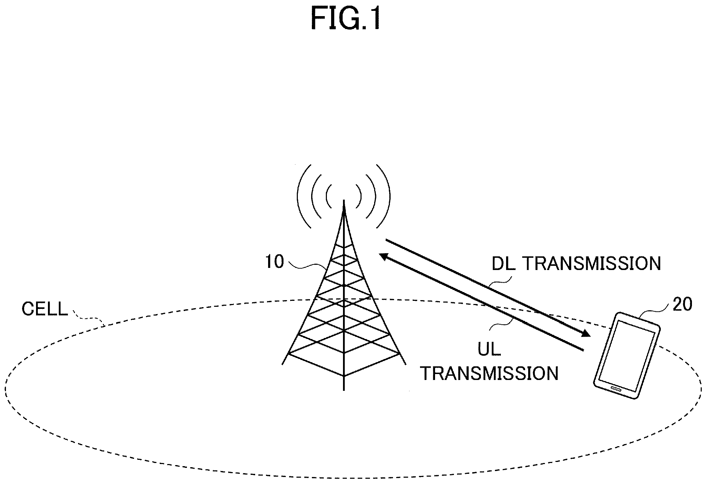

Fig. 1 is a diagram for describing a wireless communication system according to an embodiment of the present invention.

As illustrated in Fig. 1, a wireless communication system according to an embodiment of the present invention includes a base station 10 and a terminal 20. Although one base station 10 and one terminal 20 are illustrated in Fig. 1, this is an example, and a plurality of base stations 10 and a plurality of terminals 20 may be provided.

The base station 10 is a communication device that provides one or more cells and performs wireless communication with the terminal 20. The physical resources of wireless signals are defined in the time domain and the frequency domain. The time domain may be defined by the number of orthogonal frequency division multiplexing (OFDM) symbols, and the frequency domain may be defined by the number of subcarriers or the number of resource blocks. In addition, a transmission time interval (TTI) in the time domain may be a slot, or a TTI may be a subframe.

The base station 10 transmits a synchronization signal and system information to the terminal 20. The synchronization signal is, for example, an NR-PSS and an NR-SSS. The system information is transmitted through, for example, the NR-PBCH and is also referred to as "indication information". The synchronization signal and the system information may be referred to as an "SS/PBCH block (SSB)". As illustrated in Fig. 1, the base station 10 transmits a control signal or data to the terminal 20 in downlink (DL) and receives a control signal or data from the terminal 20 in uplink (UL). Both the base station 10 and the terminal 20 can transmit and receive signals by performing beamforming. In addition, both the base station 10 and the terminal 20 can apply communication based on a multiple input multiple output (MIMO) to DL or UL. In addition, both the base station 10 and the terminal 20 may perform communication via a secondary cell (SCell) and a primary cell (PCell) by carrier aggregation (CA). Furthermore, the terminal 20 may perform communication via a primary cell of the base station 10 and a primary secondary cell group cell (PSCell) of another base station 10 by dual connectivity (DC).

The terminal 20 is a communication device having a wireless communication function such as a smartphone, a mobile phone, a tablet, a wearable terminal, or a machine-to-machine (M2M) communication module. As illustrated in Fig. 1, the terminal 20 uses various communication services provided by the wireless communication system by receiving a control signal or data from the base station 10 in DL and transmitting the control signal or data to the base station 10 in UL. In addition, the terminal 20 receives various reference signals transmitted by the base station 10 and measures the propagation path quality based on the reception result of the reference signals. Note that the terminal 20 may be referred to as a "UE", and the base station 10 may be referred to as a "gNB".

In addition, in NR, a carrier aggregation function to use a broadband to secure data resources is being studied continuously following LTE. In carrier aggregation function, a plurality of component carriers is bundled, so that broadband data resources can be secured.

(Existing problem)

In the existing carrier aggregation function, data resources need to be scheduled for each of a plurality of bundled component carriers, and the large resource allocation overhead poses a problem.

Therefore, in order to solve the above-described existing problem, it is conceivable that the terminal performs resource allocation in scheduling units at a granularity that is different from that of component carriers.

A framework for performing scheduling or aggregation at a granularity different from that of component carriers is defined as frequency fragmentation.

In addition, in carrier aggregation, aggregation at a granularity different from that of component carriers is defined as non-continuous carrier aggregation.

In addition, in carrier aggregation (non-continuous carrier aggregation), performing scheduling at a granularity different from that of component carriers is defined as non-continuous scheduling.

The granularity that is different from that of component carriers described above may be a virtual CC unit, a bandwidth part (BWP) unit, a physical resource block (PRB) unit, or a PRB set unit.

A virtual CC is a carrier set in which all or some of the frequency resources included in each component carrier among a plurality of component carriers are bundled.

For example, it may be assumed that a virtual CC includes a plurality of BWPs.

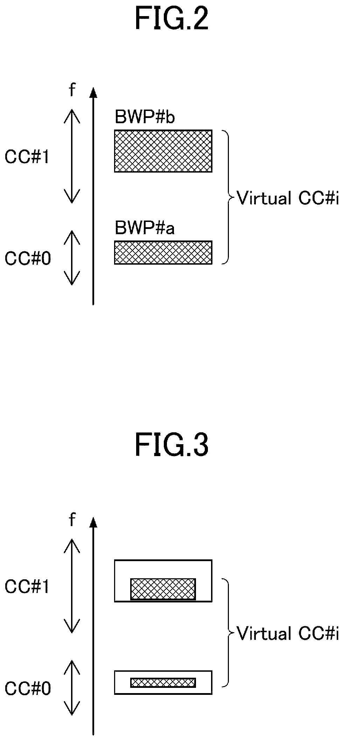

Fig. 2 is a first diagram illustrating an example structure of a virtual CC according to an embodiment of the present invention. Virtual CC #i illustrated in Fig. 2 is a carrier set in which BWP #a and BWP #b included in respective component carriers among a plurality of component carriers (CC #0 and CC #1) are bundled.

In addition, it may be assumed that a virtual CC includes a plurality of PRBs or PRB sets.

Fig. 3 is a second diagram illustrating an example structure of the virtual CC according to an embodiment of the present invention. Virtual CC #i illustrated in Fig. 3 is a carrier set in which a plurality of PRBs included in respective component carriers among a plurality of component carriers are bundled (CC #0 and CC #1). Note that the plurality of PRBs or PRB set may be included in one or a plurality of BWPs.

Hereinafter, a CC before bundling will be referred to as an "actual CC", and a CC after bundling will be referred to as a "virtual CC" or a "nominal CC". Note that the names are not limited thereto.

(Existing BWP configuration method)

Next, an existing BWP configuration method will be described.

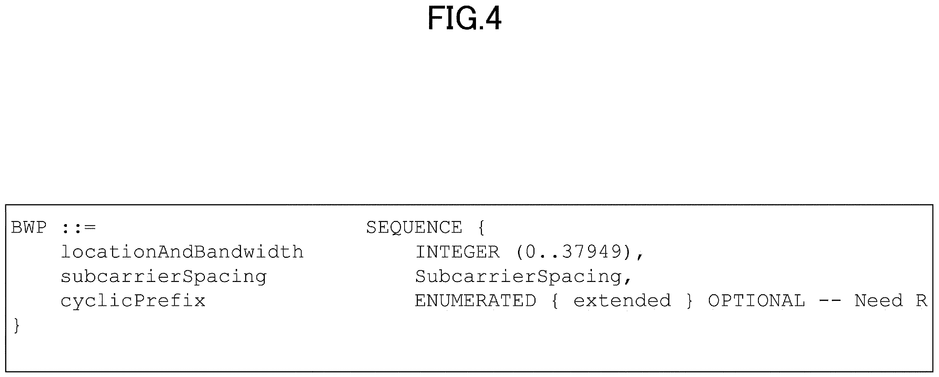

Fig. 4 is a diagram illustrating examples of parameters in an existing BWP configuration. In the related art, a terminal is provided with the following parameters of the serving cell for each downlink BWP or each uplink BWP in a set of downlink BWPs or uplink BWPs:

Parameter "subcarrierSpacing" indicating subcarrier spacing;
Parameter "CyclicPrefix" indicating a cyclic prefix;
According to a set value $N_{BWP}^{size}=275$ and a value $O_{carrier}$, which are provided by the parameter "offsetToCarrier" for the parameter "subcarrierSpacing", the number of common RBs ($N_{BWP}^{start}=O_{carrier}+RB_{start}$) and the number of consecutive RBs ($N_{BWP}^{size}=L_{RB}$), which are provided by the parameter "locationAndBandwidth," which indicates the offset $RB_{start}$ and the length $L_{RB}$s as RIVs;

Index in the set of downlink BWPs or uplink BWPs by each BWP-Id; and

A set of a parameter "BWP-DownlinkCommon" and a parameter "BWP-DownlinkDedicated" for downlink BWPs, or a set of a parameter "BWP-UplinkCommon" and a parameter "BWP-UplinkDedicated" for uplink BWPs.

The RIV is determined by the following expression.

[Math 1]

$$\text{if } (L_{RBs} - 1) \leq \lfloor N_{BWP}^{size}/2 \rfloor \text{ then}$$

$$RIV = N_{BWP}^{size}(L_{RBs} - 1) + RB_{start}$$

$$\text{else}$$

$$RIV = N_{BWP}^{size}(N_{BWP}^{size} - L_{RBs} + 1) + (N_{BWP}^{size} - 1 - RB_{start})$$

Next, BWP switching in NR release 15-17 will be described. The terminal is instructed to perform BWP switching by RRC, MAC-CE, DCI, or a timer. The DCI format 0_1/0_2/1_1/1_2 may be used for BWP switching.

The inactive timer is used to enable the terminal to fall back to a default downlink BWP and erroneously detect DCI indicating BWP switching. The timer is RRC-configured in time units of milliseconds. When there is a downlink or uplink grant or a configured downlink or uplink channel, the timer starts or restarts. Otherwise, the terminal subtracts the remaining duration of the timer at the end of the subframe in the FR1 frequency band and at the end of half of the subframe in the FR2 frequency band. When the timer expires, the terminal falls back to the default downlink BWP.

Here, the default downlink BWP is the BWP configured by "defaultDownlinkBWP-Id" (if configured); otherwise, it is the first BWP. In addition, in TDD, since downlink BWPs and uplink BWPs are associated with each other, BWP switching is performed on both downlink and uplink.

In addition, a switching delay is defined, for BWP switching, as a time at which the terminal does not need to perform transmission and reception. The switching delay time is defined as "T_BWPswitchDelay", and details thereof will be described later.

The terminal is required to be able to receive downlink signals or transmit uplink signals after a period of "T_BWPswitchDelay" starting from the beginning of a downlink slot n in which the BWP switching indication is received or the timer expires.

The terminal does not need to transmit or receive downlink or uplink signals except for DCI that indicates BWP switching, during "T_BWPswitchDelay" starting from the beginning of a downlink slot.

Note that a similar switching delay is also defined for RRC-based BWP switching.

In addition, when a BWP indicator field is designated in the DCI format, the BWP indicator field's value indicates active downlink BWPs for downlink reception from the set of configured downlink BWPs. When a BWP indicator field is designated in the DCI format, the BWP indicator field's value indicates active uplink BWPs for uplink transmission from the set of configured uplink BWPs.

In addition, when a BWP indicator field is designated in the DCI format and the active uplink BWPs or downlink BWPs indicate different uplink BWPs or different downlink BWPs, respectively, the terminal sets the active uplink BWPs or downlink BWPs to the uplink BWPs or downlink BWPs indicated by the BWP indicator in the DCI format.

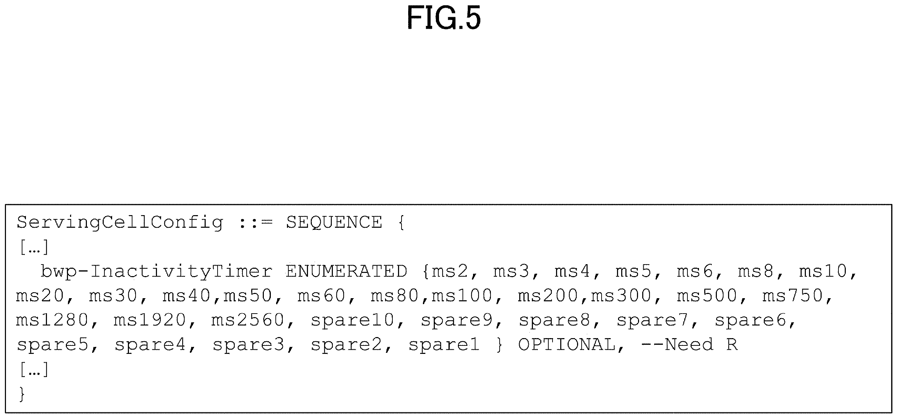

Fig. 5 is a diagram illustrating a setting example of a conventional inactive timer. For each activated serving cell designated in the "bwp-InactivityTimer" field, when the expiration date of "bwp-InactivityTimer" associated with the active downlink BWPs has expired and "defaultDownlinkBWP-Id" is configured, the terminal performs BWP switching to the BWP indicated by "defaultDownlinkBWP-Id". When "defaultDownlinkBWP-Id" is not configured, the terminal performs BWP switching to "initialDownlinkBWP".

In addition, after the terminal receives the BWP switching request in DL slot n of the serving cell in which DCI-based BWP switching occurs, immediately after the period "T_BWPswitchDelay" starting from the beginning of the DL slot n is over, the terminal can receive a PDSCH (in the case of DL active BWP switching) or transmit a PUSCH (in the case of UL active BWP switching) using new BWPs of the serving cell in which BWP switching of the first DL or UL slot takes place.

The terminal need not transmit or receive UL signals except for the DCI that triggers BWP switching in the cell in which DCI-based BWP switching occurs until the first DL or UL slot occurs immediately after the period "T_BWPswitch-

Delay" starting from the beginning of the DL slot n is over. In a case of performing DCI-based BWP switching between BWPs of channel bandwidths that do not overlap each other or channel bandwidths that partially overlap each other, the terminal need not follow the defined requirement.

For timer-based BWP switching, the terminal starts BWP switching in a DL slot n. The slot n is the first slot in a DL subframe (FR1) or DL halfsubframe (FR2) immediately after the BWP inactive timer "bwp-InactivityTimer" expires in the serving cell. The terminal needs to be able to transmit a PDSCH (in case of DL active BWP switching) or a PUSCH (in case of UL active BWP switching) using new BWPs of the serving cell in which the BWP switching of the first DL or UL slot occurs immediately after the "T_BWPswitchDelay" period starting from the beginning of the DL slot n is over.

The terminal need not transmit UL signals or receive DL signals during the period of "T_BWPswitchDelay" after the "bwpInactivityTimer" expires in the cell in which timer-based BWP switching takes place.

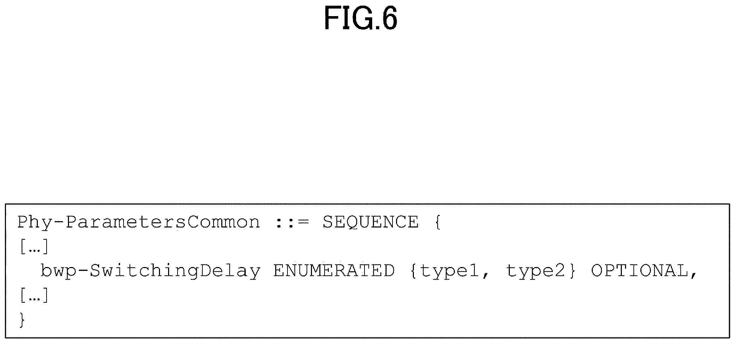

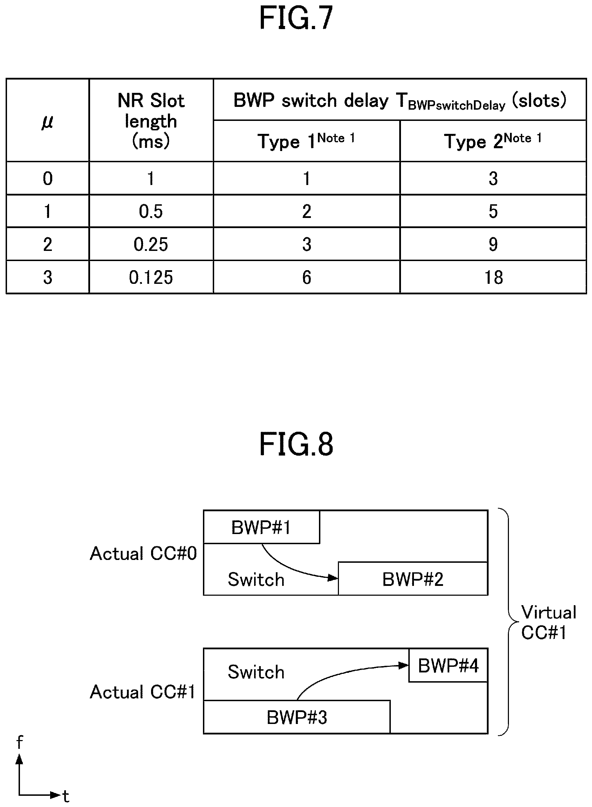

Fig. 6 is a diagram illustrating an example of terminal capability of an existing BWP switching delay. Fig. 7 is a diagram illustrating an example of an existing delay period of BWP switching.

The terminal is required to end the BWP switching within a period "TBWPswitchDelay" defined as illustrated in Fig. 7 according to the terminal capability "bwp-SwitchingDelay" illustrated in Fig. 6.

However, in the related art, there is a problem that the method of setting BWP switching in frequency fragmentation is not clear.

(Outline of present embodiment)

Therefore, in the present embodiment, a method of setting BWP switching in frequency fragmentation will be described.

First, cases that are assumed in the present embodiment will be described.

<Case 1>

In Case 1, the terminal 20 assumes that BWPs are not configured across a plurality of actual CCs.

<Case 1-1>

Fig. 8 is a diagram for describing Case 1-1 according to an embodiment of the present invention. In Case 1-1, the terminal 20 assumes that BWP switching is performed on each actual CC separately.

<Case 1-2>

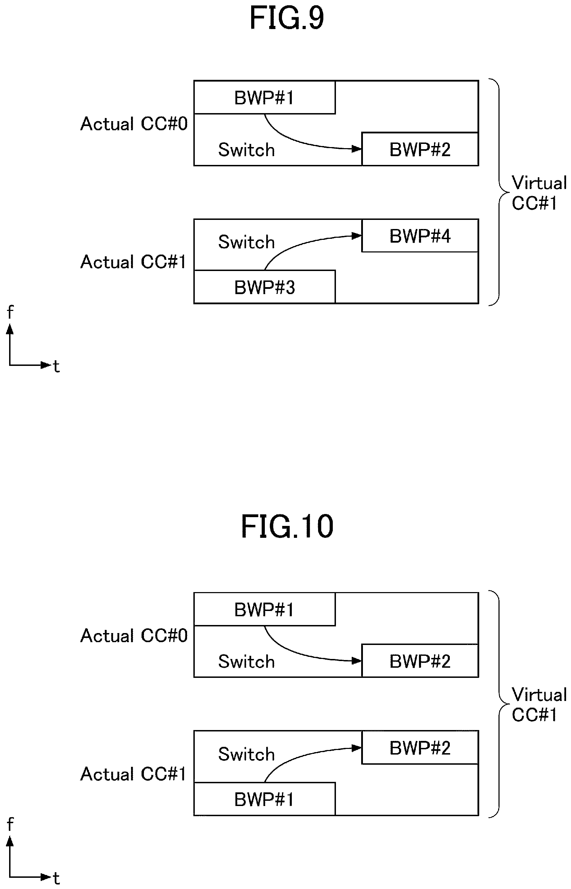

Fig. 9 is a diagram for describing Case 1-2 according to an embodiment of the present invention. In Case 1-2, when BWP switching is performed on a certain actual CC, the terminal 20 assumes that BWP switching is also performed on another actual CC.

<Case 2>

Fig. 10 is a diagram for describing Case 2 according to an embodiment of the present invention. In Case 2, the terminal 20 assumes that BWPs are configured across a plurality of actual CCs. The terminal 20 assumes that BWP switching is performed between different BWPs included in a virtual CC.

Next, the method of indicating BWP switching in each case described above will be described.

The terminal 20 may assume that BWP switching is indicated by a higher layer parameter such as RRC, a timer such as MAC-CE, or a control channel (for example, DCI) indication of a physical layer.

The terminal 20 may assume that the indication of BWP switching includes BWP information such as the BWP-ID to switch to, the timing to start BWP switching, and the like.

The timing to start BWP switching may be indicated in a unit of time such as millisecond, symbol, slot, subframe, frame, or reception of the BWP switching indication may be the starting point.

In the case of the indication by a higher layer parameter, the terminal 20 may assume that the above-described indication's content is set by a parameter.

In case the indication is given by DCI, the terminal 20 may assume that the above-described indication's content is set in the DCI field. The DCI format may be 0_0/0_1/0 2/1 0/1_1/1_2 or the like, or may be other formats.

In case the indication is given by a MAC-CE, the terminal 20 may assume that the BWP-ID to be switched to is defined as the default BWP-ID. The terminal 20 may assume that the default BWP-ID is defined by a fixed value in the technical specification (for example, the BWP to be used at the time of initial access; initial BWP), or the BWP-ID is configured/indicated by a higher layer parameter, DCI, or the like.

Furthermore, the terminal 20 may assume that a timer is introduced as a time for executing BWP switching. The timer may be set in a higher layer parameter. The terminal 20 may perform BWP switching when the timer expires. The terminal 20 may start/restart the timer when DL/UL transmission/reception is performed in an active BWP.

Next, an operation of the terminal 20 when receiving the indication will be described.

When BWP switching is indicated, the terminal 20 may perform BWP switching based on the indicated information. The terminal 20 may assume that a BWP switching delay is defined as an execution time of BWP switching.

The terminal 20 may assume that the BWP switching delay is defined by a fixed value in the technical specification, may assume that the BWP switching delay is determined by a report of terminal capabilities, a higher layer parameter, or the like, or may assume that the BWP switching delay is determined by a combination thereof.

The BWP switching delay may have different values per SCS. For example, when the SCSs of actual CCs constituting a virtual CC are different from each other, it may be assumed that the BWP switching delay is determined based on a reference SCS.

The reference SCS may be the minimum value, the maximum value, or the average value of the SCSs of the actual CCs (the actual CC including the BWP before switching and/or the actual CC including the BWP to be switched to) on which BWP switching is executed, or a default value may be defined in the technical specification, or may be set by a higher layer parameter.

The BWP switching delay may be different for each terminal 20.

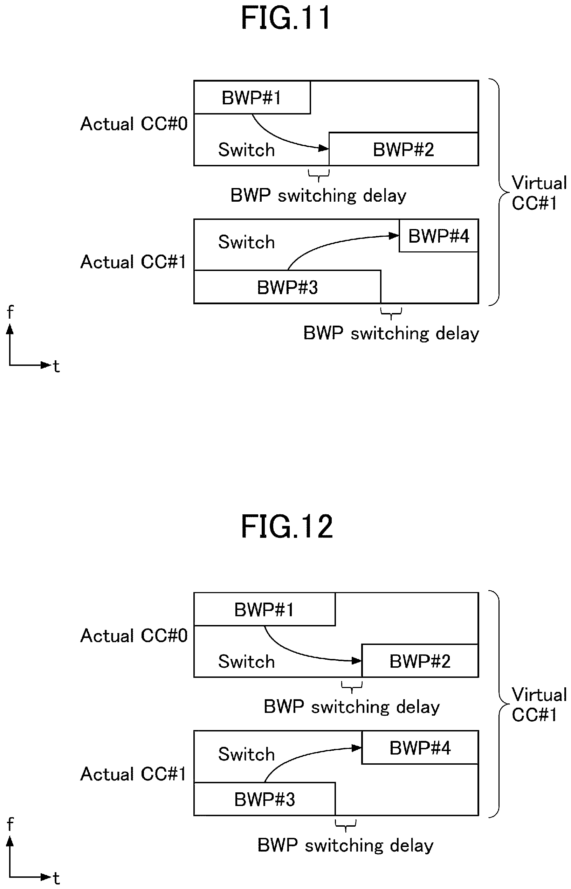

Fig. 11 is a diagram for describing the BWP switching delay in Case 1-1 according to an embodiment of the present invention. Fig. 12 is a diagram for describing the BWP switching delay in Case 1-2 according to an embodiment of the present invention.

The terminal 20 may assume that the BWP switching delay varies per actual CC in Case 1 described above (a case where BWPs are configured on a per actual CC basis).

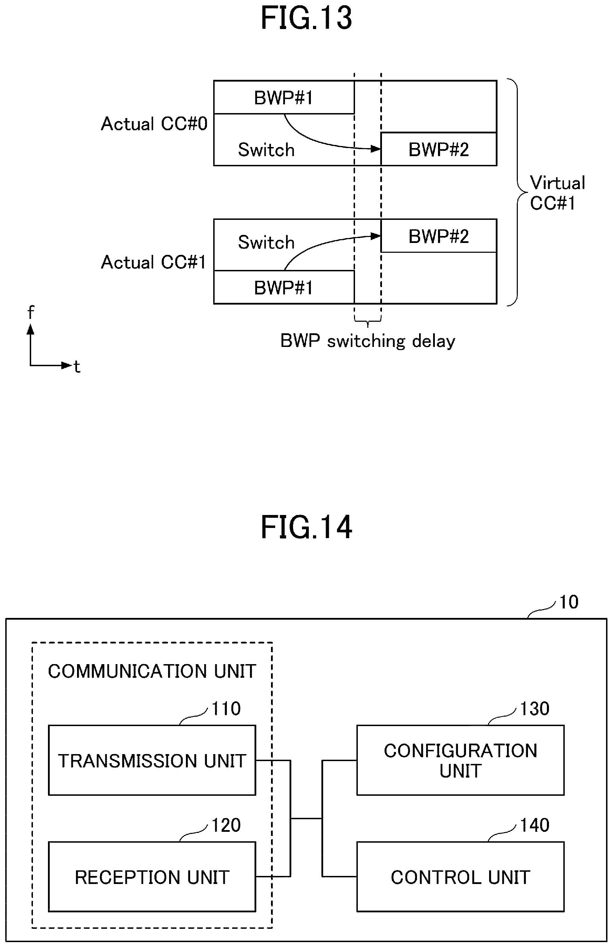

Fig. 13 is a diagram for describing the BWP switching delay in Case 2 according to an embodiment of the present invention. The terminal 20 may assume one BWP switching delay in the foregoing Case 2.

The terminal 20 need not transmit and receive the downlink signal and/or the uplink signal during the period of the BWP switching delay.

When the BWP switching indication includes the start time of BWP switching, the terminal 20 may assume that the start time of BWP switching delay is the starting point. When the BWP switching indication does not include the BWP switching start time, a time point (millisecond, symbol, slot, subframe, frame or the like) at which the BWP switching indication is received may be the starting point.

According to the present embodiment, BWP switching in frequency fragmentation can be appropriately performed.

(Device structure)

Next, example functional structures of the base station 10 and the terminal 20 that execute the processes and operations described above will be described.

<Base station 10>

Fig. 14 is a diagram illustrating an example functional structure of the base station 10. As illustrated in Fig. 14, the base station 10 includes a transmission unit 110, a reception unit 120, a setting unit 130, and a control unit 140. The functional structure illustrated in Fig. 14 is merely an example. As long as the operation according to the embodiment of the present invention can be executed, the name of the functional classification and the functional unit may be any name. Furthermore, the transmission unit 110 and the reception unit 120 may be collectively referred to as a "communication unit".

The transmission unit 110 has a function of generating a signal to be transmitted to the terminal 20 and wirelessly transmitting the signal. The reception unit 120 has a function of receiving various signals transmitted by the terminal 20 and acquiring, for example, information about a higher layer from the received signals. In addition, the transmission unit 110 has a function of transmitting NR-PSS, NR-SSS, NR-PBCH, DL/UL control signals, DCI by PDCCH, data by PDSCH, and the like to the terminal 20.

The setting unit 130 stores setting information set in advance and various types of setting information to be transmitted to the terminal 20 in a storage device included in the setting unit 130, and reads the information from the storage device as necessary.

The control unit 140 schedules DL reception or UL transmission of the terminal 20 via the transmission unit 110. Furthermore, the control unit 140 includes a function of performing LBT. The functional units related to signal transmission in the control unit 140 may be included in the transmission unit 110, and the functional units related to signal reception in the control unit 140 may be included in the reception unit 120. The transmission unit 110 may be referred to as a "transmitter", and the reception unit 120 may be referred to as a "receiver".

<Terminal 20>

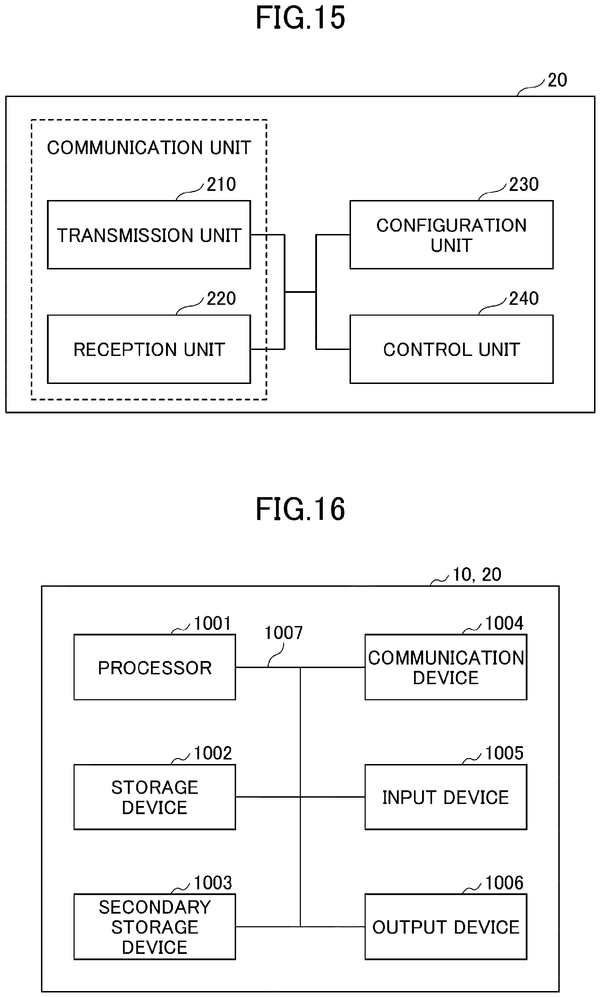

Fig. 15 is a diagram illustrating an example functional structure of the terminal 20. As illustrated in Fig. 15, the terminal 20 includes a transmission unit 210, a reception unit 220, a setting unit 230, and a control unit 240. The functional structure illustrated in Fig. 15 is merely an example. As long as the operation according to the embodiment of the present invention can be executed, the name of the functional classification and the functional unit may be any name. The transmission unit 210 and the reception unit 220 may be collectively referred to as a "communication unit."

The transmission unit 210 creates a transmission signal from the transmission data and wirelessly transmits the transmission signal. The reception unit 220 wirelessly receives various signals and acquires a signal of a higher layer from the received signal of the physical layer. In addition, the reception unit 220 has a function of receiving NR-PSS, NR-SSS, NR-PBCH, DL/UL/SL control signals, DCI by PDCCH, data by PDSCH, and the like transmitted by the base station 10. Furthermore, for example, the transmission unit 210 may transmit a physical sidelink control channel (PSCCH), a physical sidelink shared channel (PSSCH), a physical sidelink discovery channel (PSDCH), a physical sidelink broadcast channel (PSBCH), and the like as the D2D communication to another terminal 20, and the reception unit 120 may receive the PSCCH, the PSSCH, the PSDCH, the PSBCH, and the like from another terminal 20.

The setting unit 230 stores various types of setting information received from the base station 10 or another terminal by the reception unit 220 in a storage device included in the setting unit 230, and reads the information from the storage device as necessary. The setting unit 230 also stores setting information set in advance. The control unit 240 controls the terminal 20. In addition, the control unit 240 includes a function of performing LBT.

The terminal of the present embodiment may be configured as a terminal described in each of the following Clauses. In addition, the following communication method may be implemented.

<Structures according to present embodiment>

(Clause 1)

A terminal including:

a communication unit configured to perform uplink or downlink communication in a frequency band aggregated by carrier aggregation; and
a control unit configured to, when scheduling is performed with respect to a unit including a plurality of component carriers in the aggregated frequency band, switch bandwidth parts set with respect to respective component carriers in the plurality of component carriers separately or together, or switch a bandwidth part set across component carriers in the plurality of component carriers.

(Clause 2)

The terminal according to Clause **1,** further including a reception unit configured to receive an indication of bandwidth part switching in downlink.

(Clause 3)

The terminal according to Clause 1 or 2, wherein the control unit assumes that a bandwidth part switching delay varies for each of the plurality of component carriers.

(Clause 4)

The terminal according to Clause 1 or 2, wherein the control unit a bandwidth part switching delay is common in the unit including the plurality of component carriers.

(Clause 5)

A base station including:

a communication unit configured to perform communication with a terminal in a frequency band aggregated by carrier aggregation; and

a control unit configured to assume that, when scheduling is performed with respect to a unit including a plurality of component carriers in the aggregated frequency band, the terminal switches bandwidth parts that are set with respect to respective component carriers in the plurality of component carriers, separately or together, or switches a bandwidth part that is set across component carriers in the plurality of component carriers.

(Clause 6)

A communication method implemented by a terminal, the method including the steps of:

performing uplink or downlink communication in a frequency band aggregated by carrier aggregation; and when scheduling is performed with respect to a unit including a plurality of component carriers in the aggregated frequency band, switching bandwidth parts that are set with respect to respective component carriers in the plurality of component carriers, separately or together, or switching a bandwidth part that is set across component carriers in the plurality of component carriers.

Any of the above structures and configurations provides a technique capable of reducing resource allocation overhead. According to Clause **1,** it is possible to switch bandwidth parts that are set with respect to respective component carriers included in the plurality of component carriers, separately or together, or switch a bandwidth part that is set across component carriers in the plurality of component carriers. According to Clause 2, an indication of bandwidth part switching may be received in downlink. According to Clause 3, it can be assumed that the bandwidth part switching delay varies for each of the plurality of component carriers. According to Clause 4, it can be assumed that the bandwidth part switching delay is common in the unit including a plurality of component carriers.

(Hardware structure)

The block diagrams (Figs. 14 and 15) used for the description of the above embodiment illustrate blocks of functional units. These functional blocks (configuration units) are realized by an any combination of at least one of hardware and software. A method of realizing each functional block is not particularly limited. That is, each functional block may be realized by using one physically or logically combined device, or may be realized by directly or indirectly (for example, by using wired, wireless, or the like) connecting two or more physically or logically separated devices and using a plurality of these devices. The functional block may be realized by combining software with the one device or the plurality of devices.

The functions include, but are not limited to, determining, determining, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating, mapping, assigning, and the like. For example, a functional block (configuration unit) that has a function of transmission is referred to as a "transmission unit" or a transmitter. In any case, as described above, the implementation method is not particularly limited.

For example, the base station 10, the terminal 20, and the like in an embodiment of the present disclosure may function as a computer that performs a process of the wireless communication method of the present disclosure. Fig. 16 is a diagram illustrating an example of a hardware structure of the base station 10 and the terminal 20 according to an embodiment of the present disclosure. The base station 10 and the terminal 20 described above may be physically configured as a computer device including a processor 1001, a storage device 1002, an auxiliary storage device 1003, a communication device 1004, an input device 1005, an output device 1006, a bus 1007, and the like.

In the following description, the term "apparatus" can be replaced with a circuit, a device, a unit, or the like. The hardware structure of the base station 10 and the terminal 20 may be configured to include one or more devices illustrated in the figure, or may be configured without including some devices.

Each function in the base station 10 and the terminal 20 is implemented by the processor 1001 performing operation by loading predetermined software (program) on hardware such as the processor 1001 and the storage device 1002, controlling communication by the communication device 1004, and controlling at least one of reading and writing of data in the storage device 1002 and the auxiliary storage device 1003.

The processor 1001 operates, for example, an operating system to control the entire computer. The processor 1001 may include a central processing unit (CPU) including an interface with a peripheral device, a control device, an arithmetic device, a register, and the like. For example, the control unit 140, the control unit 240, and the like described above may be realized by the processor 1001.

In addition, the processor 1001 reads a program (program code), a software module, data, or the like from at least one of the auxiliary storage device 1003 and the communication device 1004 to the storage device 1002, and executes various processes according to the data. As the program, a program that causes a computer to execute at least part of the operations described in the above-described embodiments is used. For example, the control unit 140 of the base station 10 illustrated in Fig. 14 may be realized by a control program stored in the storage device 1002 and operated by the processor 1001. Furthermore, for example, the control unit 240 of the terminal 20 illustrated in Fig. 15 may be realized by a control program stored in the storage device 1002 and operated by the processor 1001. Although it is described that the above-described various processes are executed by one processor 1001, the various processes may be executed simultaneously or sequentially by two or more processors 1001. The processor 1001 may be implemented by one or more chips. The program may be transmitted from a network via an electric communication line.

The storage device 1002 is a computer-readable recording medium, and may include, for example, at least one of a read only memory (ROM), an erasable programmable ROM (EPROM), an electrically erasable programmable ROM (EEPROM), a random access memory (RAM), and the like. The storage device 1002 may be referred to as a "register", a "cache", a "main memory (main storage device)", or the like. The storage device 1002 can store a program (program code), a software module, and the like that can be executed to implement the communication method according to an embodiment of the present disclosure.

The auxiliary storage device 1003 is a computer-readable recording medium, and may include, for example, at least one of an optical disk such as a compact disc ROM (CD-ROM), a hard disk drive, a flexible disk, a magneto-optical disk (for example, a compact disc, a digital versatile disc, or a Blu-ray (registered trademark) disc), a smart card, a flash memory (for example, a card, a stick, or a key drive), a floppy (registered trademark) disk, a magnetic strip, and the like. The above-described storage medium may be, for example, a database including at least one of the storage device 1002 and the auxiliary storage device 1003, a server, or another appropriate medium.

The communication device 1004 is hardware (transmission/reception device) for performing communication between computers via at least one of a wired network and a wireless network, and is also referred to as, for example, a "network device," a "network controller," a "network card," a "communication module," or the like. The communication device 1004 may include a highfrequency switch, a duplexer, a filter, a frequency synthesizer, and the like in order to realize, for example, at least one of frequency division duplex (FDD) and time division duplex (TDD). For example, the transmission/reception antenna, the amplifier unit, the transmission/reception unit, the transmission/reception path interface, and the like may be realized by the communication device 1004. The transmission/reception unit may be physically or logically separated between the transmission unit and the reception unit.

The input device 1005 is an input device (for example, a keyboard, a mouse, a microphone, a switch, a button, a sensor, or the like) that receives an input from the outside. The output device 1006 is an output device (for example, a display, a speaker, an LED lamp, and the like) that performs output to the outside. Note that the input device 1005 and the output device 1006 may be integrated (for example, the touch panel).

In addition, the respective devices such as the processor 1001 and the storage device 1002 are connected by the bus 1007 for communicating information. The bus 1007 may be configured using a single bus or may be configured using different buses between the devices.

Furthermore, the base station 10 and the terminal 20 may include hardware such as a microprocessor, a digital signal processor (DSP), an application specific integrated circuit (ASIC), a programmable logic device (PLD), or a field programmable gate array (FPGA), and some or all of the functional blocks may be realized by the hardware. For example, the processor 1001 may be implemented using at least one of these pieces of hardware.

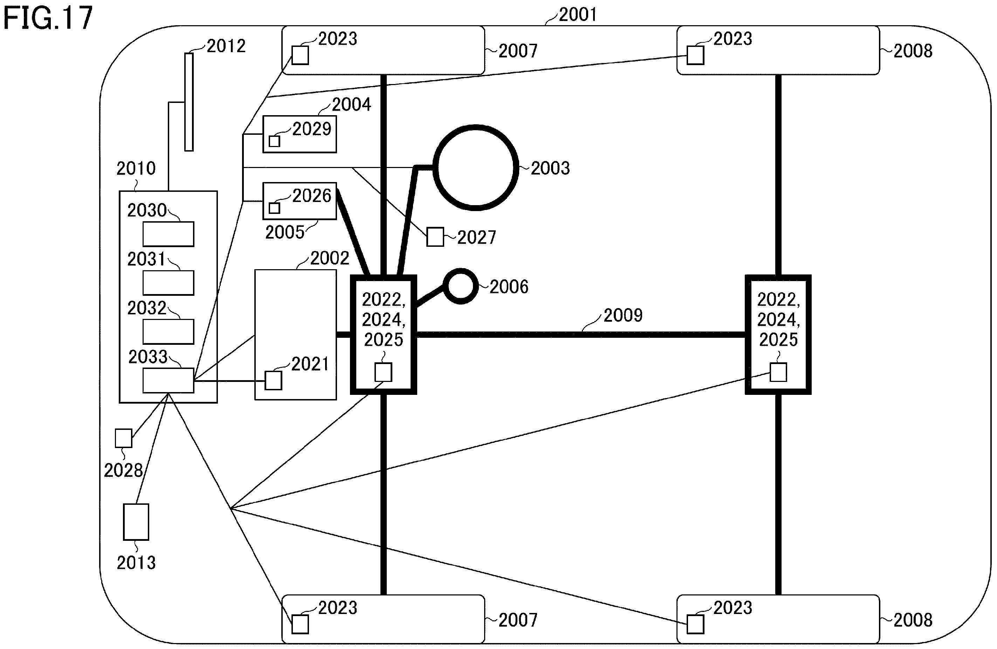

Fig. 17 illustrates a configuration example of a vehicle 2001. As illustrated in Fig. 17, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021 to 2029, an information service unit 2012, and a communication module 2013. Each aspect/embodiment described in the present disclosure may be applied to a communication device mounted on the vehicle 2001, and for example, may be applied to the communication module 2013.

The drive unit 2002 includes, for example, an engine, a motor, or a hybrid of an engine and a motor. The steering unit 2003 includes at least a steering wheel (also referred to as a "steering wheel"), and is configured to steer at least one of the front wheel and the rear wheel based on an operation of the steering wheel operated by the user.

The electronic control unit 2010 includes a microprocessor 2031, a memory (ROM, RAM)2032, and a communication port (IO port) 2033. Signals from various sensors 2021 to 2029 provided in the vehicle 2001 are input to the electronic control unit 2010. The electronic control unit 2010 may be referred to as "an electronic control unit (ECU)".

Examples of the signals from the various sensors 2021 to 2029 include a current signal from the current sensor 2021 that senses the current of the motor, a rotation speed signal of the front wheel and the rear wheel acquired by the rotation speed sensor 2022, an air pressure signal of the front wheel and the rear wheel acquired by the air pressure sensor 2023, a vehicle speed signal acquired by the vehicle speed sensor 2024, an acceleration signal acquired by the acceleration sensor 2025, a depression amount signal of the accelerator pedal acquired by the accelerator pedal sensor 2029, a depression amount signal of the brake pedal acquired by the brake pedal sensor 2026, an operation signal of the shift lever acquired by the shift lever sensor 2027, and a detection signal for detecting an obstacle, a vehicle, a pedestrian, and the like acquired by the object detection sensor 2028.

The information service unit 2012 includes various devices for providing (outputting) various types of information such as driving information, traffic information, and entertainment information, such as a car navigation system, an audio system, a speaker, a television, and a radio, and one or more ECUs that control these devices. The information service unit 2012 provides various kinds of multimedia information and multimedia services to the occupant of the vehicle 2001 using information acquired from an external device via the communication module 2013 or the like.

The information service unit 2012 may include an input device (for example, a keyboard, a mouse, a microphone, a switch, a button, a sensor, a touch panel, or the like) that receives an input from the outside, or may include an output device (for example, a display, a speaker, an LED lamp, a touch panel, or the like) that performs output to the outside.

A driving assistance system unit 2030 includes various devices for providing functions for preventing an accident in advance and reducing a driver's driving load, such as a millimeter wave radar, light detection and ranging (LiDAR), a camera, a positioning locator (for example, GNSS or the like), map information (for example, a high definition (HD) map, an automatic driving vehicle (AV) map, and the like), a gyro system (for example, an inertial measurement unit (IMU), an inertial navigation system (INS), or the like), an artificial intelligence (AI) chip, and an AI processor, and one or more ECUs for controlling these devices. The driving assistance system unit 2030 also transmits and receives various types of information via the communication module 2013 to achieve a driving assistance function or an automatic driving function.

The communication module 2013 may communicate with the microprocessor 2031 and components of the vehicle 2001 via a communication port. For example, the communication module 2013 transmits and receives data to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and the sensor 2021 to 2029 provided in the vehicle 2001 via a communication port 2033.

The communication module 2013 is a communication device that can be controlled by the microprocessor 2031 of the electronic control unit 2010 and can communicate with an external device. For example, various types of information are transmitted and received to and from an external device via wireless communication. The communication module 2013 may be either inside or outside the electronic control unit 2010. The external device may be, for example, a base station, a mobile station, or the like.

The communication module 2013 may transmit at least one of signals from the above-described various sensors 2021 to 2029 input to the electronic control unit 2010, information obtained based on the signals, and information based on an input from the outside (user) obtained via the information service unit 2012 to the external device via wireless communication. The electronic control unit 2010, the various sensors 2021 to 2029, the information service unit 2012, and the like may be referred to as "input units" that receive inputs. For example, the PUSCH transmitted by the communication module 2013 may include information based on the above input.

The communication module 2013 receives various types of information (traffic information, signal information, inter-vehicle information, etc.) transmitted by an external device, and displays the information on the information service unit 2012 provided in the vehicle 2001. The information service unit 2012 may be referred to as an "output unit" that outputs information (for example, output information to a device such as a display or a speaker based on a PDSCH (or data/information decoded from the PDSCH) received by the communication module 2013).

The communication module 2013 also stores various types of information received from external devices in the memory 2032 available by the microprocessor 2031. The microprocessor 2031 may control the drive unit 2002, the steering unit 2003, the accelerator pedal 2004, the brake pedal 2005, the shift lever 2006, the front wheel 2007, the rear wheel 2008, the axle 2009, the sensor 2021 to 2029, and the like included in the vehicle 2001 based on the information stored in the memory 2032.

(Supplement to embodiment)

Although the embodiments of the present invention have been described above, the disclosed invention is not limited to such embodiments, and those skilled in the art will understand various modifications, alterations, alternatives, substitutions, and the like. Although the description has been given using specific numerical examples to facilitate understanding of the invention, these numerical values are merely examples, and any appropriate value may be used unless otherwise specified. The classification of items in the above description is not essential to the present invention, and items described in two or more items may be used in combination as necessary, or items described in one item may be applied to items described in another item (as long as there is no contradiction). A boundary of a functional unit or a processing unit in the functional block diagram does not necessarily correspond to a boundary of a physical component. The operation of the plurality of functional units may be physically performed by one component, or the operation of one functional unit may be physically performed by a plurality of components. In the processing procedure described in the embodiment, the order of the processing may be changed as long as there is no contradiction. For convenience of processing description, the base station 10 and the terminal 20 have been described using a functional block diagram, but such a device may be realized by hardware, software, or a combination thereof. The software operated by the processor included in the base station 10 according to the embodiments of the present invention and the software operated by the processor included in the terminal 20 according to the embodiments of the present invention may be stored in any appropriate storage medium such as a random access memory (RAM), a flash memory, a read-only memory (ROM), an EPROM, an EEPROM, a register, a hard disk (HDD), a removable disk, a CD-ROM, a database, or a server.

Furthermore, the indication of information is not limited to an indication according to the aspects/embodiments described in the present disclosure, and may be performed using other methods. For example, the indication of information may be performed by physical layer signaling (for example, downlink control information (DCI) and uplink control information (UCI)), higher layer signaling (for example, radio resource control (RRC) signaling and medium access control (MAC) signaling), indication information (master information block (MIB), system information block (SIB)), other signals, or a combination thereof. Furthermore, the RRC signaling may be referred to as an "RRC message", and may be, for example, an "RRC connection setup message", an "RRC connection reconfiguration message", or the like.

Each aspect/embodiment described in the present disclosure may be applied to at least one of systems using Long Term Evolution (LTE), LTE-Advanced (LTE-A), SUPER 3G, IMT-Advanced, fourth generation mobile communication system (4G), fifth generation mobile communication system (5G), sixth generation mobile communication system (6G), x-th generation mobile communication system (xG) (xG (x is, for example, an integer or a decimal)), future radio access (FRA), new radio (NR), new radio access (NX), future generation radio access (FX), W-CDMA (registered trademark), GSM (registered trademark), CDMA 2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), and other appropriate systems, and the next generation system extended, modified, created, and defined based on these systems. Also, a plurality of systems may be applied in combination (for example, a combination of at least one of LTE and LTE-A and 5G, and the like).

The order of the processing procedure, sequence, flowchart, and the like of each aspect/embodiment described in this specification may be changed as long as there is no contradiction. For example, for the methods described in the present disclosure, elements of various steps are presented using an example order, and are not limited to the particular order presented.

The specific operation described as being performed by the base station 10 in this specification may be performed by an upper node thereof in some cases. In a network including one or more network nodes having the base station 10, it is obvious that various operations performed for communication with the terminal 20 may be performed by at least one of the base station 10 and other network nodes (for example, MME, S-GW, or the like is conceivable, but is not limited thereto) other than the base station 10. Although the case where the number of other network nodes other than the base station 10 is one has been exemplified above, the other network nodes may be a combination of a plurality of other network nodes (for example, MME and S-GW).

Information, a signal, or the like described in the present disclosure can be output from a higher layer (or lower layer) to a lower layer (or higher layer). Input and output may be performed via a plurality of network nodes.

The input/output information and the like may be stored in a specific location (for example, memory) or may be managed using a management table. The input/output information and the like can be overwritten, updated, or additionally written. The output information and the like may be deleted. The input information and the like may be transmitted to another device.

The determination in the present disclosure may be made by a value represented by one bit (0 or 1), may be made by a true/false value (Boolean: true or false), or may be made by comparison of numerical values (for example, comparison with a predetermined value) .

Software, whether referred to as software, firmware, middleware, microcode, hardware description language, or other names, should be construed broadly to mean an instruction, an instruction set, a code, a code segment, a program code, a program, a subprogram, a software module, an application, a software application, a software package, a routine, a subroutine, an object, an executable file, an execution thread, a procedure, a function, and the like.

In addition, software, instructions, information, and the like may be transmitted and received via a transmission medium. For example, in a case where software is transmitted from a website, a server, or another remote source using at least one of a wired technology (a coaxial cable, an optical fiber cable, a twisted pair, a digital subscriber line (DSL), or the like) and a wireless technology (infrared rays, microwaves, etc.), at least one of these wired and wireless technologies is included within the definition of the transmission medium.

The information, signals, and the like described in the present disclosure may be represented using any of a variety of different techniques. For example, data, an instruction, a command, information, a signal, a bit, a symbol, a chip, and the like that may be mentioned throughout the above description may be represented by a voltage, a current, an electromagnetic wave, a magnetic field or a magnetic particle, an optical field or a photon, or any combination thereof.

Note that the terms described in the present disclosure and the terms necessary for understanding the present disclosure may be replaced with terms having the same or similar meanings. For example, at least one of the channel and the symbol may be a signal (signaling). The signal may also be a message. In addition, a component carrier (CC) may be referred to as a "carrier frequency", a "cell", a "frequency carrier", or the like.

The terms "system" and "network" used in the present disclosure are used interchangeably.

In addition, the information, the parameter, and the like described in the present disclosure may be represented using an absolute value, may be represented using a relative value from a predetermined value, or may be represented using another corresponding information. For example, the wireless resource may be indicated by an index.

The names used for the parameters described above are not limited in any respect. Furthermore, expressions and the like using these parameters may be different from those explicitly disclosed in the present disclosure. Since various channels (for example, PUCCH, PDCCH, and the like) and information elements can be identified by any suitable name, various names allocated to these various channels and information elements are not in any way limitative names.

In the present disclosure, terms such as "base station (BS)", "wireless base station", "base station", "fixed station", "NodeB", "eNodeB (eNB)", "gNodeB (gNB)", "access point", "transmission point", "reception point", "transmission/reception point", "cell", "sector", "cell group", "carrier", and "component carrier" can be used interchangeably. The base station may also be referred to as a "macro cell", a "small cell", a "femtocell", a "picocell", or the like.

The base station may accommodate one or more (for example, three) cells. In a case where the base station accommodates a plurality of cells, an entire coverage area of the base station may be divided into a plurality of smaller areas, and each smaller area may also provide a communication service by a base station subsystem (for example, a small base station for indoor use (remote radio head (RRH))). The term "cell" or "sector" refers to part or the whole of a coverage area of at least one of a base station and a base station subsystem that performs communication service in this coverage.

In the present disclosure, that the base station transmits information to the terminal may be read as that the base station instructs the terminal to perform control and operation based on the information.

In the present disclosure, terms such as a "mobile station (MS)", a "user terminal", a "user equipment (UE)", and a "terminal" can be used interchangeably.

The mobile station may also be referred to by those skilled in the art as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable term.

At least one of the base station and the mobile station may be referred to as a "transmission device", a reception device, a communication device, or the like. Note that at least one of the base station and the mobile station may be a device mounted on the mobile object, a mobile object itself, or the like. The mobile object refers to a movable object, and a moving speed is arbitrary. In addition, a case where the mobile object is stopped is naturally included. The mobile object includes, for example, a vehicle, a transport vehicle, an automobile, a motorcycle, a bicycle, a connected car, an excavator, a bulldozer, a wheel loader, a dump truck, a forklift, a train, a bus, a hand cart, a human-powered vehicle, a ship and other watercraft, an airplane, a rocket, an artificial satellite, a drone (registered trademark), a multicopter, a quadcopter, a balloon, and objects mounted thereon, and is not limited thereto. Further, the mobile object may be a mobile object that autonomously travels based on an operation command. It may be a vehicle (for example, a car, an airplane, or the like), a mobile object moving unmanned (for example, a drone, an automatic driving vehicle, or the like), or a robot (manned type or unmanned type). Note that at least one of the base station and the mobile station includes a device that does not necessarily move during the communication operation. For example, at least one of the base station and the mobile station may be an Internet of Things (IoT) device such as a sensor.

In addition, the base station in the present disclosure may be read as a user terminal. For example, each aspect/embodiment of the present disclosure may be applied to a configuration in which communication between a base station and a user terminal is replaced with communication (for example, it may be referred to as "device-to-device (D2D)", "vehicle-to-everything (V2X)", or the like) between a plurality of terminals 20. In this case, the terminal 20 may have the function of the base station 10 described above. In addition, words such as "uplink" and "downlink" may be read as words corresponding to terminal-to-terminal communication (for example, "side"). For example, the uplink channel, the downlink channel, and the like may be replaced with side channels.

Similarly, the user terminal in the present disclosure may be read as a base station. In this case, the base station may have the function of the user terminal described above.

The terms "determining" and "determining" used in the present disclosure may encompass a wide variety of actions. The terms "determining" and "determining" may include regarding, for example, determining, calculating, computing, processing, deriving, investigating, searching (looking up, search, inquiry) (for example, searching in a table, a database, or another data structure), and ascertaining as "determining" and "determining". Furthermore, "determining" and "determining" may include regarding receiving (for example, receiving information), transmitting (for example, transmitting information), input, output, and accessing (for example, accessing data in a memory) as "determining" and "determining". In addition, "determining" and "determining" may include regarding resolving, selecting, choosing, establishing, comparing, and the like as "determining" and "determining". That is, "determining" and "determining" may include regarding some operation as "determining" and "determining". Further, "determining" may be read as "assuming", "expecting", "considering", or the like.

The terms "connected", "coupled", or any variation thereof, mean any direct or indirect connection or coupling between two or more elements, and can include the presence of one or more intermediate elements between two elements that are "connected" or "coupled" to each other. The coupling or connection between the elements may be physical, logical, or a combination thereof. For example, "connection" may be read as "access". As used in this disclosure, two elements can be considered to be "connected" or "coupled" to one another using at least one of one or more wires, cables, printed electrical connections, and as some non-limiting and non-exhaustive examples, using electromagnetic energy having wavelengths in the wireless frequency domain, the microwave domain, and the light (both visible and invisible) domain, and the like.

The reference signal may be abbreviated as a reference signal (RS), or may be referred to as a "pilot" according to an applied standard.

As used in this disclosure, the description "based on" does not mean "based only on" unless explicitly stated otherwise. In other words, the description "based on" means both "based only on" and "based at least on".

Any reference to elements using names such as "first", "second", and the like as used in the present disclosure does not generally limit the amount or order of those elements. These names may be used in the present disclosure as a convenient way to distinguish between two or more elements. Thus, references to first and second elements do not imply that only two elements may be employed or that the first element must in any way precede the second element.

The "means" in the configuration of each device described above may be replaced with a "unit", a "circuit", a "device", or the like.

Where the present disclosure uses the terms "include", "including", and variations thereof, these terms are intended to be inclusive in a manner similar to the term "comprising". Furthermore, the term "or" used in the present disclosure is intended not to be an exclusive OR.

The wireless frame may include one or more frames in the time domain. One frame or each of a plurality of frames in the time domain may be referred to as a "subframe". The subframe may further include one or more slots in the time domain. The subframe may be a fixed time length (for example, 1 ms) that is numerology independent.

The numerology may be a communication parameter applied to at least one of transmission and reception of a signal or channel. The numerology may indicate at least one of, for example, a subcarrier spacing (SCS), a bandwidth, a symbol length, a cyclic prefix length, a transmission time interval (TTI), the number of symbols per TTI, a wireless frame configuration, a particular filtering process performed by the transceiver in the frequency domain, a particular windowing process performed by the transceiver in the time domain, and the like.

The slot may include one or a plurality of symbols (orthogonal frequency division multiplexing (OFDM) symbol, single carrier frequency division multiple access (SC-FDMA) symbol, etc.) in the time domain. The slot may be a time unit based on the numerology.

The slot may include a plurality of mini-slots. Each mini-slot may include one or more symbols in the time domain. Further, the mini-slot may be referred to as a "sub-slot". The mini-slot may include a smaller number of symbols than the slot. The PDSCH (or PUSCH) transmitted in a time unit larger than the mini-slot may be referred to as a "PDSCH (or PUSCH) mapping type A". The PDSCH (or PUSCH) transmitted using the mini-slot may be referred to as a "PDSCH (or PUSCH) mapping type B".

Each of the wireless frame, the subframe, the slot, the mini-slot, and the symbol represents a time unit when a signal is transmitted. Different names corresponding to the wireless frame, the subframe, the slot, the mini-slot, and the symbol may be used.

For example, one subframe may be referred to as a "transmission time interval (TTI)", a plurality of consecutive subframes may be referred to as a "TTI", and one slot or one mini-slot may be referred to as a "TTI". That is, at least one of the subframe and the TTI may be a subframe (1 ms) in existing LTE, a period shorter than 1 ms (for example, 1-13 symbols), or a period longer than 1 ms. Note that the unit representing the TTI may be referred to as a "slot", a "mini-slot", or the like instead of a subframe.

Here, the TTI refers to, for example, a minimum time unit of scheduling in wireless communication. For example, in the LTE system, the base station performs scheduling of allocating a wireless resource (frequency bandwidth, transmission power, and the like that can be used in each terminal 20) to each terminal 20 in units of TTIs. Note that the definition of the TTI is not limited thereto.

The TTI may be a transmission time unit such as a channel coded data packet (transport block), a code block, or a code word, or may be a processing unit such as scheduling or link adaptation. Note that, when a TTI is given, a time interval (for example, the number of symbols) in which a transport block, a code block, a code word, or the like is actually mapped may be shorter than the TTI.

Note that, in a case where one slot or one mini-slot is referred to as a "TTI", one or more TTIs (that is, one or more slots or one or more mini-slots) may be the minimum time unit of scheduling. Furthermore, the number of slots (the number of mini-slots) constituting the minimum time unit of the scheduling may be controlled.

The TTI with a time length of 1 ms may be referred to as an "ordinary TTI" (TTI in LTE Rel. 8-12), a "normal TTI", a "long TTI", an "ordinary subframe", a "normal subframe", a "long subframe", a "slot", or the like. A TTI shorter than the ordinary TTI may be referred to as a "shortened TTI", a "short TTI", a "partial TTI (partial or fractional TTI)", a "shortened subframe", a "short subframe", a "mini-slot", a "sub-slot", a "slot", or the like.

Note that the long TTI(for example, an ordinary TTI, a subframe, or the like) may be read as a TTI having a time length exceeding 1 ms, and the short TTI (for example, a shortened TTI or the like) may be read as a TTI having a TTI length less than the TTI length of the long TTI and equal to or greater than 1 ms.

The resource block (RB) is a resource allocation unit in the time domain and the frequency domain, and may include one or a plurality of consecutive subcarriers in the frequency domain. The number of subcarriers included in the RB may be the same regardless of the numerology, for example, may be 12. The number of subcarriers included in the RB may be determined based on the numerology.

In addition, the time domain of the RB may include one or more symbols, and may be a length of one slot, one mini-slot, one subframe, or one TTI. Each of one TTI, one subframe, and the like may be constituted by one or more resource blocks.

Note that one or a plurality of RBs may be referred to as a "physical resource block (PRB)", a "sub-carrier group (SCG)", a "resource element group (REG)", a "PRB pair", an "RB pair", or the like.

Furthermore, the resource block may include one or a plurality of resource elements (REs). For example, one RE may be a wireless resource area of one subcarrier and one symbol.

A bandwidth part (BWP) (which may also be referred to as a "partial bandwidth" or the like) may represent a subset of contiguous common resource blocks (RBs) for a numerology on a carrier. Here, the common RB may be identified by an index of the RB based on the common reference point of the carrier. The PRB may be defined by a certain BWP and numbered within the BWP.

The BWP may include a BWP for UL (UL BWP) and a BWP for DL (DL BWP). One or a plurality of BWPs may be configured in one carrier for the terminal 20.

At least one of the configured BWPs may be active, and the terminal 20 need not assume that a predetermined signal/channel is transmitted and received outside the active BWPs. Note that "cell", "carrier", and the like in the present disclosure may be read as "BWP".

The above-described structures such as a wireless frame, a subframe, a slot, a mini-slot, and a symbol are merely examples. For example, the configuration such as the number of subframes included in a wireless frame, the number of slots per subframe or wireless frame, the number of mini-slots included in a slot, the number of symbols and RBs included in a slot or mini-slot, the number of subcarriers included in an RB, the number of symbols in a TTI, a symbol length, a cyclic prefix (CP) length, and the like can be variously changed.

In the present disclosure, for example, in a case where articles such as a, an, and the in English are added when translated, the present disclosure may include a noun following these articles being a plural form.

In the present disclosure, the term "A and B are different" may mean "A and B are different from each other". The term may mean that "each of A and B is different from C". The terms such as "leave", "coupled" and the like may also be interpreted in the same manner as "different".

Each aspect/embodiment described in the present disclosure may be used alone, or may be used in combination, or may be used by being switched with execution. Furthermore, indication of predetermined information (for example, indication of "being X") is not limited to being performed explicitly, and may be performed implicitly (for example, the predetermined information is not notified).

Although the present disclosure is described in detail above, it is apparent to those skilled in the art that the present disclosure is not limited to the embodiments described in the present disclosure. The present disclosure can be implemented as modifications and variations without departing from the spirit and scope of the present disclosure defined by the claims. Therefore, the description of the present disclosure is for the purpose of exemplification and does not have any restrictive meaning to the present disclosure.

Reference Signs List

| | |
|---|---|
| 10 | base station |
| 110 | transmission unit |
| 120 | reception unit |
| 130 | setting unit |
| 140 | control unit |
| 20 | terminal |
| 210 | transmission unit |
| 220 | reception unit |
| 230 | setting unit |
| 240 | control unit |
| 1001 | processor |

1002    storage device
1003    auxiliary storage device
1004    communication device
1005    input device
1006    output device
2001    vehicle
2002    drive unit
2003    steering unit
2004    accelerator pedal
2005    brake pedal
2006    shift lever
2007    front wheel
2008    rear wheel
2009    axle
2010    electronic control unit
2012    information service unit
2013    communication module
2021    current sensor
2022    rotation speed sensor
2023    air pressure sensor
2024    vehicle speed sensor
2025    acceleration sensor
2026    brake pedal sensor
2027    shift lever sensor
2028    object detection sensor
2029    accelerator pedal sensor
2030    driving assistance system unit
2031    microprocessor
2032    memory (ROM, RAM)
2033    communication port (IO port)

**Claims**

1.  A terminal comprising:

    a communication unit configured to perform uplink or downlink communication in a frequency band aggregated by carrier aggregation; and
    a control unit configured to, when scheduling is performed with respect to a unit including a plurality of component carriers in the aggregated frequency band, switch bandwidth parts that are set with respect to respective component carriers in the plurality of component carriers, separately or together, or switch a bandwidth part that is set across component carriers in the plurality of component carriers.

2.  The terminal according to claim **1,** further comprising a reception unit configured to receive an indication of bandwidth part switching in downlink.

3.  The terminal according to claim **1,** wherein the control unit assumes that a bandwidth part switching delay varies for each of the plurality of component carriers.

4.  The terminal according to claim **1,** wherein the control unit assumes that a bandwidth part switching delay is common in the unit including the plurality of component carriers.

5.  A base station comprising:

    a communication unit configured to perform communication with a terminal in a frequency band aggregated by carrier aggregation; and
    a control unit configured to assume that, when scheduling is performed with respect to a unit including a plurality of component carriers in the aggregated frequency band, the terminal switches bandwidth parts that are set with respect to respective component carriers in the plurality of component carriers, separately or together, or switches a bandwidth part that is set across component carriers in the plurality of component carriers.

6. A communication method implemented by a terminal, the method comprising the steps of:

performing uplink or downlink communication in a frequency band aggregated by carrier aggregation; and when scheduling is performed with respect to a unit including a plurality of component carriers in the aggregated frequency band, switching bandwidth parts that are set with respect to respective component carriers in the plurality of component carriers, separately or together, or switching a bandwidth part that is set across component carriers in the plurality of component carriers.

# FIG.1

EP 4 514 017 A1

# FIG.2

# FIG.3

# FIG.4

```
BWP ::=                          SEQUENCE {
    locationAndBandwidth             INTEGER (0..37949),
    subcarrierSpacing                SubcarrierSpacing,
    cyclicPrefix                     ENUMERATED { extended } OPTIONAL -- Need R
}
```

# FIG.5

EP 4 514 017 A1

```
ServingCellConfig ::= SEQUENCE {
[…]
  bwp-InactivityTimer ENUMERATED {ms2, ms3, ms4, ms5, ms6, ms8, ms10,
ms20, ms30, ms40,ms50, ms60, ms80,ms100, ms200,ms300, ms500, ms750,
ms1280, ms1920, ms2560, spare10, spare9, spare8, spare7, spare6,
spare5, spare4, spare3, spare2, spare1 } OPTIONAL, --Need R
[…]
}
```

# FIG.6

```
Phy-ParametersCommon ::= SEQUENCE {
[…]
  bwp-SwitchingDelay ENUMERATED {type1, type2} OPTIONAL,
[…]
}
```

# FIG.7

| $\mu$ | NR Slot length (ms) | BWP switch delay $T_{BWPswitchDelay}$ (slots) | |
|---|---|---|---|
| | | Type 1[Note 1] | Type 2[Note 1] |
| 0 | 1 | 1 | 3 |
| 1 | 0.5 | 2 | 5 |
| 2 | 0.25 | 3 | 9 |
| 3 | 0.125 | 6 | 18 |

# FIG.8

# FIG.9

# FIG.10

# FIG.11

# FIG.12

# FIG.13

Actual CC#0

| BWP#1 | |
|-------|-------|
| Switch → | BWP#2 |

Actual CC#1

| Switch → | BWP#2 |
|-------|-------|
| BWP#1 | |

Virtual CC#1

BWP switching delay

f
t

# FIG.14

10

COMMUNICATION UNIT

110
TRANSMISSION UNIT

130
CONFIGURATION UNIT

120
RECEPTION UNIT

140
CONTROL UNIT

# FIG.15

COMMUNICATION UNIT

20

TRANSMISSION UNIT 210

RECEPTION UNIT 220

CONFIGURATION UNIT 230

CONTROL UNIT 240

# FIG.16

10, 20

PROCESSOR 1001

1007

COMMUNICATION DEVICE 1004

STORAGE DEVICE 1002

INPUT DEVICE 1005

SECONDARY STORAGE DEVICE 1003

OUTPUT DEVICE 1006

# FIG.17

## INTERNATIONAL SEARCH REPORT

| | International application No. |
|---|---|
| | **PCT/JP2022/018626** |

| | |
|---|---|
| **A.** | **CLASSIFICATION OF SUBJECT MATTER** |

*H04W 72/0457*(2023.01)i; *H04W 72/0453*(2023.01)i
FI:    H04W72/04 111; H04W72/04 132

According to International Patent Classification (IPC) or to both national classification and IPC

| | |
|---|---|
| **B.** | **FIELDS SEARCHED** |

Minimum documentation searched (classification system followed by classification symbols)

　　　H04W72/04

Documentation searched other than minimum documentation to the extent that such documents are included in the fields searched

　　　Published examined utility model applications of Japan 1922-1996
　　　Published unexamined utility model applications of Japan 1971-2022
　　　Registered utility model specifications of Japan 1996-2022
　　　Published registered utility model applications of Japan 1994-2022

Electronic data base consulted during the international search (name of data base and, where practicable, search terms used)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | US 2021/0314924 A1 (QUALCOMM INCORPORATED) 07 October 2021 (2021-10-07) paragraphs [0065]-[0084], fig. 3-4 | 1-2, 5-6 |
| Y | | 3 |
| A | | 4 |
| Y | ERICSSON. Reduced maximum UE bandwidth for RedCap. 3GPP TSG-RAN WG1 Meeting #105-e R1-2104179, [online]. 12 May 2021, pp. 1-28, [retrieved on 10 November 2022], <URL: https://www.3gpp.org/ftp/tsg_ran/WG1_RL1/TSGR1_105-e/Docs/R1-2104179.zip> 5.2 RF switching and BWP switching delay [pp. 21-22] | 3 |
| A | HUAWEI. HISILICON. Discussion on low latency SCell activation and efficient SCell management. 3GPP TSG-RAN WG1 Meeting #98bis R1-1910039, [online]. 05 October 2019, pp. 1-19, [retrieved on 2022-11-10], <URL: https://www.3gpp.org/ftp/tsg_ran/WG1_RL1/TSGR1_98b/Docs/R1-1910039.zip> 3 Efficient SCell management [pp. 3-6] | 1-6 |

☐ Further documents are listed in the continuation of Box C.　　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 November 2022** | **22 November 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2022/018626**

| Patent document cited in search report | Publication date (day/month/year) | Patent family member(s) | Publication date (day/month/year) |
|---|---|---|---|
| US 2021/0314924 A1 | 07 October 2021 | WO 2021/202551 A1 | |

Form PCT/ISA/210 (patent family annex) (January 2015)

**REFERENCES CITED IN THE DESCRIPTION**

**Non-patent literature cited in the description**

- *3GPP TS 38.300 V16.8.0*, December 2021